# EUROPÄISCHE PATENTSCHRIFT

(11) **EP 3 723 215 B1**
(45) Veröffentlichungstag und Bekanntmachung des Hinweises auf die Patenterteilung: **29.06.2022**
(21) Anmeldenummer: 20177559.0
(22) Anmeldetag: 29.09.2017
(51) Int. Cl.: H02G 3/18, H02G 3/04, E04F 17/08

(54) **EINSTELLBARE BELAGSTOSSKANTE FÜR KABELKANÄLE**
ADJUSTABLE LINING WELT FOR CABLE DUCTS
ARÊTE DE JONCTION FORMANT REVÊTEMENT RÉGLABLE POUR GOUTTIÈRE DE CÂBLE

(43) Veröffentlichungstag der Anmeldung: 14.10.2020
(62) Teilanmeldung aus: 17306305.8
(73) Patentinhaber: Tehalit GmbH, 67716 Heltersberg (DE)
(72) Erfinder: LETTERMANN, Gert, 67688 RODENBACH (DE); MATHEIS, Hans-Toni, 66976 RODALBEN (DE)
(74) Vertreter: Cabinet Nuss

(56) Entgegenhaltungen:
- DE-A1- 2 166 319
- DE-A1-102006 014 830
- DE-U1-202011 107 398

## Beschreibung

Die vorliegende Erfindung betrifft ein Bodenkanalsystem zur Leitungsführung und zum Einbau von Elektrogeräten, z.B. Steckdosen, Verteiler, usw.

Die moderne Büroarchitektur stellt besondere Ansprüche an die Elektroinstallation, da Wände, an denen ein Kabelkanalsystem angebracht werden könnte, zunehmend durch Glasfronten ersetzt werden. Dies macht die Installation eines Bodenkanals unumgänglich.

Bodenkanäle oder Brüstungskanäle für elektrotechnische Installationen ermöglichen eine Leitungsführung oder einen Geräteeinbau elektrischer Geräte im Unterboden, so dass das Kanalsystem als solches, zum Beispiel unter dem Teppichboden, unsichtbar ist. Ein wesentlicher Vorteil bei einem Kanalsystem im Unterboden besteht darin, dass Leitungen und Dosen in der Wand nicht mehr notwendig sind und somit die elektrischen Anschlüsse und Leitungen direkt an den Platz geführt werden können, an dem sie gebraucht werden.

Eingelassen im Unterboden wird er entlang der Wände oder Fensterfronten geführt. Auf eine stabile Abdeckung oder einen Deckel lassen sich unterschiedliche Bodenbeläge aufbringen, beispielsweise Parkett, Laminat, Platten oder Teppichboden. Der Kanal wird dadurch nahezu vollständig unsichtbar und fügt sich nahtlos in das Raumdesign ein. An den Stellen, an denen Kabelauslässe oder Anschlüsse gewünscht sind, verfügt ein Bodenkanal über entsprechende Auslässe, die normalerweise in Form einer Bürstenleiste umgesetzt werden. Die Leitungen können über die Bürstenleiste an der Wandseite direkt in den Raum geführt werden.

Ein solcher Bodenkanal ist beispielsweise in der DE 20 2005 018 605 U1 und der DE 20 2011 107 398 U1 beschrieben. Der Kanal besteht aus einem Unterteil mit U-förmigem Querschnitt, einem Boden und zwei Seitenwänden sowie wenigstens einem abnehmbaren Deckel. Der Deckel besitzt wenigstens einen kurzen Schenkel, und an der Seitenwand des Unterteils ist innen ein Steg vorgesehen. Das freie Ende des Stegs ist so geformt, dass der Schenkel des Deckels lösbar in das korrespondierend geformte Ende passt. Die Bürstenleiste zum Leitungsauslass ist mit dem Deckel verbunden. Bei der DE 20 2011 107 398 U1 ist eine in der Höhe verstellbare L-förmige Belagstoßkante zwischen Deckel und Seitenwand des Unterteils vorgesehen, auf welcher sich der Deckel abstützt.

Bei der Installation auf der Baustelle wird der Bodenbelag einfach auf den Deckel gelegt oder festgeklebt. Zur Anpassung der Bürstenleiste an einen auf dem Deckel aufliegenden Bodenbelag ist diese höhenverstellbar ausgeführt. Hinsichtlich unterschiedlicher Anforderungen in Bezug auf Leitungsführungs- und Geräteeinbau ist dieser Kanal jedoch nicht flexibel genug. Wird der Kanal beispielsweise in der Raummitte geführt, ist eine Bürstenleiste entbehrlich. Auch ist der Geräteeinbau wenig flexibel. Muss der Kanal um eine Ecke verlegt werden, so sind für das Inneneck und das Außeneck getrennte Flachwinkel erforderlich. Der Monteur muss daher mehrere Zubehörteile mit sich führen.

Ein Brüstungskanal für elektrotechnische Installationen mit einem im Wesentlichen U-förmigen Installationskanal und einem Abdeckteil, welches an dem Kanal gehaltert ist, vorzugsweise schwenkbar, ist in der DE 296 06 869 U1 beschrieben. Zwischen dem Abdeckteil und dem Installationskanal befindet sich ein Spalt zum Auslass von elektrischen Anschlussleitungen. Der Installationskanal ist in Einbausolllage mit im Wesentlichen horizontal gerichteter Basis und vertikal nach oben gerichteten Schenkeln angeordnet.

Der vorliegenden Erfindung liegt daher die Aufgabe zugrunde, ein Bodenkanalsystem anzugeben, das dem Monteur in seinen unterschiedlichen Ausführungsvarianten die größtmögliche Flexibilität bietet und bei dem zugleich die Montage gegenüber bekannten Kanalsystemen für verschiedene Montagesituationen erleichtert wird. Insbesondere, müssen bei den bekannten Produkten aus dem Stand der Technik bei der Montage alle vorhandenen Klemmschrauben zunächst gelöst werden, wobei die in der Höhe einzustellende Belagstoßkante nicht in den Kanalunterteil versacken soll. Danach wird üblicherweise die besagte Belagstoßkante auf das entsprechende Maß, je nach Bodenbelagsstärke, einfach von Hand angehoben und die vorderste, danach die hinterste Schraube angezogen. Hier ist oft ein Nachjustieren, das heißt ein Öffnen und ein umständliches sowie unpraktisches Anziehen dieser Schrauben nötig, da ein paralleles Anheben der Leiste per Hand, meistens über 2 m lang sind für einen einzelnen Monteur nicht einfach ist.

Diese Aufgabe wird gelöst durch ein Bodenkanalsystem mit den Merkmalen des Anspruchs 1. Bevorzugte Ausführungsformen finden sich in den Unteransprüchen wieder.

Das erfindungsgemäße Bodenkanalsystem besteht aus einem U-förmigen Kanalunterteil mit Seitenwänden, einem Boden und seitlichen, dem Inneren des Kanalunterteils zugewandten Deckelhalteprofilen, einem abnehmbaren Deckel, der das Innere des Kanalunterteils teilweise oder vollständig abdeckt und mindestens von den Deckelhalteprofilen gestützt und festgehalten wird, mindestens einer am Boden des Kanalunterteils lösbar befestigten Systemträgerleiste, die zur Befestigung von Elektroinstallationsgeräten und/gegebenenfalls als Verstärkungsstege oder Stützen dient, wobei das Bodenkanalsystem ferner für jede Seitenwand eine Belagstoßkante umfasst, die im Wesentlichen als rechteckige, bandförmige, starre Leiste ausgebildet ist, die nach oben herausgezogen werden kann, damit deren vorstehende vertikale Höhe gegenüber dem ebenen Deckel verstellbar und entlang der ganzen Leiste konstant ist. An jeder inneren Seite des Kanalunterteils ist zwischen den Seitenwänden und den Deckelhalteprofilen jeweils eine Belagstoßkante geklemmt, wobei die Klemmfunktion einerseits durch in den Seitenwänden ausgeschnittene Federlaschen und andererseits durch die Kontaktfläche der inneren Deckelhalteprofile gewährleistet wird.

Alle Teile sind in der Regel aus Metall, insbesondere Edelstahl oder verzinktem Stahlblech, die Profile sind vorteilhafterweise eher aus Aluminium oder einer Aluminium enthaltenden Legierung (Leichtmetall), und die mit den Elektrogeräte oder Kabel bestückten Module eher aus einen harten Kunststoff.

Die Deckelhalteprofile dienen der Auflage und dem Halt des Deckels (Oberteil oder Abdeckung, insbesondere indem dieser in bekannter Weise darauf aufgeschraubt oder aufgeklippt wird. Dieser abnehmbare Deckel deckt das Innere des Kanalunterteils je nach Montagesituation wenigstens teilweise oder vollständig ab. Der Deckel ist an sich konventionell und dem Fachmann bekannt und wird hier aus Klarheitsgründen auf den Figuren nicht dargestellt bzw. hier nicht näher beschrieben. Zur Abstützung des Deckels und ggf. zur Befestigung von Elektroinstallationsgeräten befindet sich am Boden des Kanalunterteils vorteilhafterweise eine lösbar befestigte und versetzbare Systemträgerleiste.

Die Systemträgerleiste ist in unterschiedliche Positionen am Kanalboden aufsteckbar. Hierfür befinden sich am Kanalboden gegenüber dem Kanalboden entsprechende Löcher, Ausnehmungen oder z. B. abstehende Laschen, an die die Systemträgerleiste befestigbar ist.

Hinsichtlich des Geräteeinbaus erhält man somit die größtmögliche Flexibilität bei zugleich erleichtertem Montagezugang zu den Geräten, Kabeln oder ähnlichen elektrischen oder optischen Modulen.

Die seitlich an der Kanalinnenseite der Seitenwände des Kanalunterteils befestigbaren Belagstoßkanten oder Belagsleisten des erfindungsgemäßen Bodenkanalsystems dienen als Abschluss für einen Bodenbelag, beispielsweise Parkett, Laminat, Platten oder Teppichboden. Diese seitlichen Belagsleisten, die hier auch als Belagstoßkanten bezeichnet werden, sind jeweils zwischen dem Deckelhalteprofil und der Seitenwand des Kanalunterteils angeordnet und gegenüber der Seitenwand des Kanalunterteils höhenverstellbar. Dadurch kann die Belagsleiste an die unterschiedlichen Höhen des Bodenbelags angepasst werden. Es wird somit eine Nivellierung des Bodenbelags mit der Belagsleiste möglich, eine ungünstige sowie unästhetische Spaltbildung wird entsprechend verhindert.

Zwischen Deckel und Seitenwand des Bodenkanals ist also zur Anpassung an den jeweiligen Bodenbelag eine Belagsleiste oder Belagstoßkante vorgesehen, die über darin eingearbeitete Langlöcher zur Positionierung und anschließenden Verschraubung höhenverstellbar ausgeführt ist. Die Langlöcher ermöglichen eine stufenlose Höhenpositionierung der einzelnen Leisten und Anpassung an den Bodenbelag.

Einzelheiten und weitere Vorteile der erfindungsgemäßen Vorrichtung werden anhand der nachfolgend beschriebenen Ausführungsbeispiele erläutert. Dabei veranschaulichen im Einzelnen:
- Fig. 1a-1d: eine erste nicht zur Erfindung gehörende Variante eines Bodenkanalsystems mit einer L-förmigen Belagstoßkante in einer Teilansicht einer Seitenwand eines Gerätekanals;
- Fig. 2a-2d: eine zweite nicht zur Erfindung gehörende Variante eines Bodenkanalsystems mit einer als flache Wand ausgebildeten Belagstoßkante in einer Teilansicht einer Seitenwand eines anderen Gerätekanals, und
- Fig. 3a-3d: eine erfindungsgemäße Ausführungsvariante eines Bodenkanalsystems mit einer als flache Wand ausgebildeten Belagstoßkante in einer Teilansicht einer Seitenwand eines anderen Gerätekanals, welche ohne die vertikale Höhenverstellschraube auskommt und eine alternative Befestigung des Deckelprofils aufweist.

Klarheitshalber wurde in allen folgenden Beschreibungen der Figuren jeweils nur ein Ausschnitt des ganzen Gerätekanals oder Bodenkanal dargestellt. Der Deckel, der sonst diesen Kabelkanal üblicherweise bedeckt wurde in den verschiedenen Figuren weggelassen.

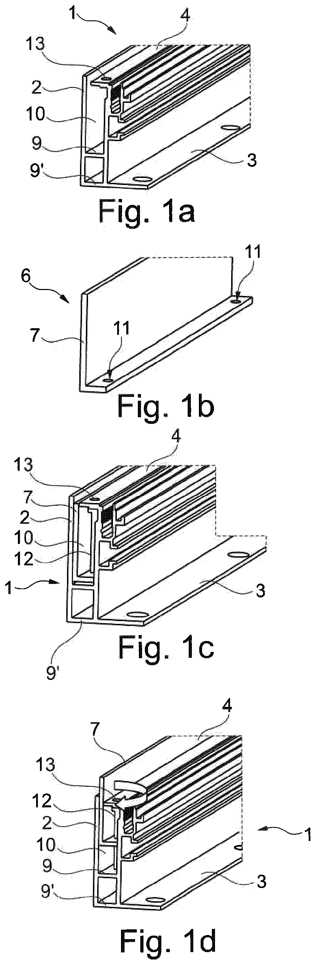

In den Fig. 1a-1d ist eine erste nicht zur Erfindung gehörende Variante eines Bodenkanalsystems gezeigt.

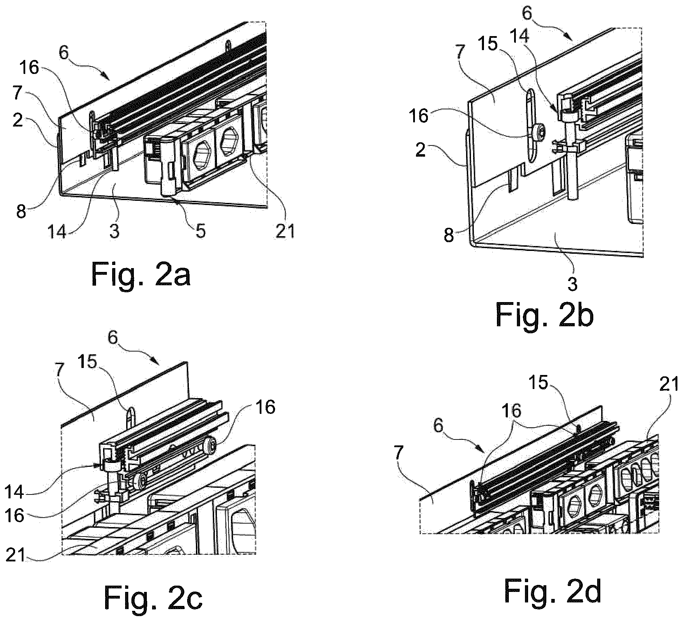

Das Kanalunterteil 1 besteht hier aus einem Boden 3 sowie zwei seitlichen Seitenwänden 2 (hier nur eine teilweise sichtbar), die dem Kanalunterteil 1 eine gewisse U-Form verleihen. Am Boden 3 des Kanalunterteils 1 ist gewöhnlich Systemträgerleisten 5 angeordnet (s. Fig. 2a) die insbesondere der Abstützung des Deckels dient. Die Systemträgerleisten können üblicherweise in unterschiedliche Positionen versetzt werden und werden am Boden 3, z. B. über ausgebildete Laschen gehalten oder über Clips angebracht.

Der nicht dargestellte Deckel wird in der Bauphase von den Deckelhalteprofilen 4 provisorisch festgehalten, z. B. festgeschraubt. Der End-Deckel wird üblicherweise nur aufgelegt. Auf diesem Deckel werden dann in der Praxis unterschiedliche Bodenbeläge aufgebracht, wie beispielsweise Laminat, Parkett, Platten oder Teppichböden. Zur Begrenzung sind dann seitliche sogenannte Belagstoßkanten 6 vorgesehen, die seitlich an der Kanalinnenseite einer Seitenwand 2 des Kanalunterteils 1 angeordnet sind und dort mit dem Deckelhalteprofil 4 festgeklemmt sind. Dazu weisen die Seitenwände 2 mehrere Federlaschen 8 auf (s. z. B. Fig 2a oder 2b), die einfach in der Seitenwand 2 durch Entfernung von Metall realisiert werden. Die Belagsleiste oder Belagstoßkante 6 wird bei der Montage an der Baustelle entlang der Seitenwand 2 des Kanalunterteils 1 nach oben geführt und in der gewünschten Höhe festgehalten. Zur Bewegung und Befestigung in der Seitenwand 2 dienen mindestens zwei Langlöcher 15, in denen eine Verschraubung mit der Seitenwand 2 und dem Deckelhalteprofil 4 des Kanalunterteils 1 erfolgt. In der Realität können natürlich Belagsleisten bzw. Belagstoßkanten 6 links- und rechtsseitig an allen Seitenwänden 2 des Kanalunterteils 1 angebracht werden.

Das nicht zur Erfindung gehörende Bodenkanalsystem, besteht somit aus
- einem U-förmigen Kanalunterteil 1 mit Seitenwänden 2, einem Boden 3 und seitlichen, dem inneren des Kanalunterteils 1 zugewandten Deckelhalteprofilen 4,
- einem abnehmbaren Deckel, der das Innere des Kanalunterteils 1 teilweise oder vollständig abdeckt und mindestens von den Deckelhalteprofilen 4 gestützt und gehalten wird,
- einer am Boden 3 des Kanalunterteils 1 lösbar befestigten Systemträgerleiste 5 die zur Befestigung von Elektroinstallationsgeräten und gegebenenfalls als Verstärkungsstege oder Stützen dienen, und
- an jeder inneren Seite des Kanalunterteils 1 jeweils zwischen den Seitenwänden 2 und den Deckelhalteprofilen 4 geklemmten Belagstoßkanten 6, die als rechteckige, bandförmige, starre Leisten 7 ausgebildet sind, die nach oben herausgezogen werden können, damit deren vorstehende vertikale Höhe gegenüber dem ebenen Deckel verstellbar und entlang der ganzen Leiste 7 konstant ist. Dabei wird die Klemmfunktion einerseits durch in den Seitenwänden 2 ausgeschnittene Federlaschen 8 und andererseits durch die Kontaktfläche der inneren Deckelhalteprofile 4 gewährleistet.

Bei dem nicht zu der Erfindung gehörenden Bodenkanalsystem ist jede Seitenwand 2 mit dem Deckelhalteprofil 4 durch mindestens einen horizontalen Steg 9, 9' verbunden, um eine Art U-förmige, nach oben offene Kammer 10 zu bilden in der die Belagstoßkante 6 hoch und runter gefahren werden kann.

Die Belagstoßkante 6 ist als eine L-förmige Leiste 7 ausgebildet, deren kurzer Schenkel an jedem Ende ein Gewinde 11 aufweist, durch das eine Schraube 12 geführt ist, welche sich auf diesen kurzen Schenkel stützt und von außen gedreht werden kann, um die Belagstoßkante 6 hoch und runter zu fahren.

Das Deckelhalteprofil 4 weist an seinem oberen Ende eine in Richtung Seitenwand 2 abstehende Kante auf, in der jeweils Öffnungen 13 vorgesehen sind, die es erlauben die Schraube 12 von oben zu betätigen um die Belagstoßkante 6 und somit die Leiste 7 nach oben oder unten zu verschieben (s. Fig. 1a-1d).

Eine zweite, nicht zu der Erfindung gehörende Variante wird in den Figuren 2a bis 2d schematisch dargestellt.

In dieser Variante befindet sich die Belagstoßkante 6 und deren Leiste 7 nicht in einer Art Kammer, sondern ist zwischen jeweils den Seitenwänden 2 und den Deckelhalteprofilen 4 (Aluminiumprofil) geklemmt. Die Höheneinstellung auf das gewünschte Niveau des Bodenbelags wird mittels zwei vertikalen Stellschrauben 14 gewährleistet, nachdem die horizontalen Klemmschrauben oder Festziehschrauben 16 gelöst wurden. Diese werden am Ende wieder festgezogen. Hier stützt sich wie angedeutet die Stellschraube 14 auf dem Bodenblech des Bodens 3 ab. Anstatt des Gewindes im kurzen Schenkel, wie im ersten Beispiel der Figuren 1a bis 1d, wird hier ein Mutterkäfig mit Mutter des Typs "M5" in der Belagstoßkante 6 befestigt. Die Belagstoßkante 6 wird geklemmt, da das Aluminiumprofil eine feste Verbindung zu der Seitenwand 2 benötigt.

Bei dieser nicht zu der Erfindung gehörenden Variante ist das Deckelhalteprofil 4 mit der Belagstoßkante 6 verbunden, und die Belagstoßkante 6 weist an jedem kurzen Ende eine Stellschraube 14 auf, die es, durch Drehung, ermöglicht, diese beiden Elemente gleichzeitig nach oben oder unten zu verschieben. Die Leiste 7 der Belagstoßkante 6 weist an jedem längsseitigen Ende ferner Langlöcher 15 auf, die mit entsprechenden horizontalen Festziehschrauben 16 an der Seitenwand 2 kooperieren, um die gewünschte eingestellte Höhe der Belagstoßkante 6 und Leiste 7 vorübergehend oder definitiv zu blockieren.

Zusammengefasst, erfolgt die Montage in der Praxis so:
- Schritt 1: lösen aller horizontaler Festziehschrauben 16,
- Schritt 2: nivellieren mit der vorderen Stellschraube 14,
- Schritt 3: nivellieren mit der hinteren Stellschraube 14,
- Schritt 4: Festziehen aller Schrauben.

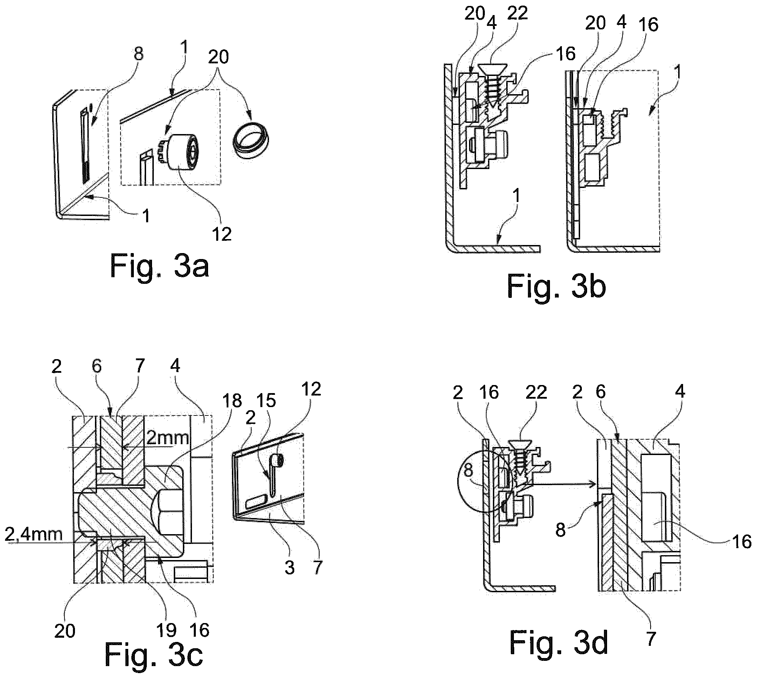

Eine erfindungsgemäße Ausführung des Bodenkanalsystems ist in den Figuren 3a bis 3d schematisch dargestellt.

Diese erfindungsgemäße Ausführung ist dadurch gekennzeichnet dass zwischen dem Deckelhalteprofil 4 und der Seitenwand 2 die Belagstoßkante 6 von in der Seitenwand 2 angebrachten Federlaschen 8 geklemmt wird und in der Höhe verstellt werden kann indem eine spezielle horizontale Festziehschraube 16 mit einem Kopf 18 von innen in Richtung Seitenwand 2 durch das Deckelhalteprofil 4 und die Belagstoßkante 6 geschraubt wird, wobei an deren Schaft 19 zwischen Deckelhalteprofil 4 und Seitenwand 2 ein Quetschring 20 angebracht ist, dessen Breite im vorläufigen unmontierten Zustand grösser ist als die Breite der Belagstoßkante 6.

Kernteile dieser Nivelliervariante sind die Federlaschen 8 im Kanalunterteil 1 und der Quetschring 20.

Das Alu-Seitenprofil (Deckelhalteprofil 4) wird zum Aufbau mittels horizontaler Festziehschrauben 16 im Inneren des Kanalunterteils 1 seitlich befestigt (s. vergrößerten Ausschnitt der Fig. 3c). Zwischen dem besagten Alu-Profil und der Seitenwand 2 aus Blech des Kanalunterteils 1 wird ein Quetschring 20 montiert. Dieser hat eine Höhe von z. B. 2,4 mm.

Die Belagstoßkante 6 sitzt folglich ebenfalls zwischen diesem Alu-Profil und dieser Blechwand. Sie ist als Leiste 7 mit einer Stärke von 2 mm dünner als der Quetschring 20, was entscheidend ist, damit sie nicht zwischen dem besagten Alu-Profil und der besagten Blechwand geklemmt wird.

Die Belagstoßkante 6 hat Ausschnitte sowie Langlöcher 15, damit sie an den beiden Quetschringen 20 (an den beiden Extremitäten der Leiste 7) nicht anliegt und sich in der Höhe wie vorgesehen einfach und sicher verschieben lässt.

Bei dem Zusammenbau (Montage) des Kabelkanals werden die Festziehschrauben 16 mit geringem Drehmoment angezogen, damit die Quetschringe 20, die aus einem elastischen oder zumindest flexiblen Material gefertigt wurden (Kunststoff, Gummi,...), nicht zerquetscht werden aber auch damit sich die Festziehschrauben 16 beim Transport nicht durch Erschütterungen lösen.

Dadurch dass der Quetschring 20 breiter ist als die Belagstoßkante 6 dick, kann sich die Belagstoßkante 6 in der Höhe frei bewegen.

Die seitlichen Federlaschen 8, im Kanalunterteil 1 drücken die Belagstoßkante 6 an das Deckelhalteprofil 4. Solche Federlaschen 8 werden geschaffen, z. B. indem eine schmale U-förmige Portion Metall aus dem Deckelhalteprofil entfernt wird, z. B. ausgestanzt oder mit einer Laserperforation. Es entsteht somit (s. Fig. 3d) ein biegbares Band, dass mit der Leiste 7 in genügender Weise in Kontakt steht und durch Reibung die Belagstoßkante 6 festhält und trotzdem ihre Verstellung in der Höhe ermöglicht.

Nachdem der Kabelkanal auf der Baustelle eingebaut ist und der Estrich vergossen ist, wird die Belagstoßkante 6 auf die Höhe des später fertigen Fußbodens eingestellt.

Hierzu muss der Monteur nur die Belagstoßkante 6 anheben. Durch die Federkraft der Federlasche 8 im Kanalunterteil wird die Belagstoßkante 8 an das Alu-Profil des Deckelhalteprofils 4 gedrückt und sackt nicht mehr ab bzw. fällt nicht mehr runter.

Der Monteur muss nicht mehr, wie bei den Produkten aus dem Stand der Technik, alle Schrauben lösen, die das Alu-Profil am Kanalunterteil 1 befestigen.

Ist die Belagstoßkante 6 durch zwei einfache Handgriffe auf die erforderliche Höhe eingestellt, müssen die Festziehschrauben 16, die das Deckelhalteprofil 4 am Kanalunterteil 1 befestigen mit einem stärkeren Drehmoment nachgezogen werden, sodass die Quetschringe 20 zerquetscht werden und die Belagstoßkante 6 zwischen Deckelhalteprofil 4 und der Seitenwand 2 des Kanalunterteils 1 geklemmt wird.

Der große Vorteil der vorliegenden Erfindung gegenüber den Produkten aus dem Stand der Technik besteht darin, dass das Lösen aller Schrauben um die Belagstoßkante 6 bewegen zu können entfällt, und die Belagstoßkante 6 nach dem Anheben während des Einstellprozesses in ihrer Position sicher verbleibt, ohne dass der Monteur in aufwendiger Weise Schrauben festziehen muss.

In einer bevorzugten Variante besteht der Quetschring 20 also aus einem flexiblen oder elastischen Material, insbesondere aus einem Kunststoff, der es ermöglicht das die Breite des Quetschrings 20 im endgültigen montierten Zustand der Breite der Belagstoßkante 6 entspricht.

Als praktisches Beispiel kann man, wie erwähnt, einen Quetschring 20 auswählen, der von ca. 2,4 mm auf ca. 2,0 mm gequetscht wird.

Vorteilhafterweise, ebenfalls wie oben erwähnt, ist das erfindungsgemäße Bodenkanalsystem noch dadurch gekennzeichnet, dass das Deckelhalteprofil 4 aus Aluminium oder einer Aluminiumlegierung besteht.

In einer bevorzugten Ausführung ist der abnehmbare (nicht dargestellte) Deckel, der das Innere des Kanalunterteils 1 wenigstens teilweise oder vollständig abdeckt mittels im Deckelhalteprofil 4 vorhandenen Deckelschrauben 22 mit dem Kanalunterteil 1 verbunden (s. Fig. 3b oder 3d - mit fixierten Schrauben, ohne Deckel). Somit wird ein einfaches Öffnen und Schließen des Kabelkanals möglich, z. B. bei Reparatur- oder Wartungsarbeiten.

Positiv ist es auch wenn am Boden 3 des Kanalunterteils 1 ferner ein oder mehrere, gegebenenfalls demontierbare, Stützrahmen 21 vorgesehenen sind, die den auf den Deckel ausgeübten Druck besser verteilen. Ein solcher Stützrahmen 21 ist auf den Fig. 2a, 2c und 2d gut zu erkennen. Die Stabilität und Belastbarkeit wird so erheblich und kostengünstig erhöht.

Wie schon erwähnt, ist es ebenfalls vorteilhaft wenn der oder die Stützrahmen 21 ebenfalls Mittel aufweisen die es ermöglichen Elektrogeräte dort einzurasten, elektrische Kabel hindurchzuführen, zu befestigen und/oder durch das gesamte Kanalunterteil 1 hindurch zu führen.

Das erfindungsgemäße Bodenkanalsystem ermöglicht somit die komplette Ausstattung eines Büroraumes mit einem Bodenkanal. Vorteilhaft ist insbesondere, dass mit wenigen Bauteilen eine komplette, einfache und präzise Kanalmontage ermöglicht wird. Die höhenverstellbaren Leisten 7 der Belagstoßkanten 6 ermöglichen eine optimale Nivellierung an den jeweils verwendeten Bodenbelag.

Selbstverständlich ist die Erfindung nicht auf die beschriebene und dargestellte Ausführungsform begrenzt. Änderungen der verschiedenen Bestandteile oder Ersetzungen durch technische Äquivalente sind, soweit sie im Rahmen des beanspruchten Schutzbegehrens bleiben, jederzeit möglich.

## Patentansprüche

1. Bodenkanalsystem, mit einem U-förmigen Kanalunterteil (1) mit Seitenwänden (2), einem Boden (3) und seitlichen, im Inneren des Kanalunterteils (1) angeordneten Deckelhalteprofilen (4), einem abnehmbaren Deckel, der das Innere des Kanalunterteils (1) teilweise oder vollständig abdeckt und mindestens von den Deckelhalteprofilen (4) gestützt und gehalten wird, mindestens einer am Boden (3) des Kanalunterteils (1) lösbar befestigten Systemträgerleiste (5) die zur Befestigung von Elektroinstallationsgeräten und gegebenenfalls als Verstärkungssteg oder Stütze dient, wobei das Bodenkanalsystem ferner für eine oder jede Seitenwand (2) eine Belagstoßkante (6) umfasst, die im Wesentlichen als bandförmige, starre Leiste (7) ausgebildet ist, die nach oben herausgezogen werden kann, damit deren vorstehende vertikale Höhe gegenüber dem Deckel verstellbar und entlang der ganzen Leiste (7) konstant ist, wobei jede Belagstoßkante (6) an einer inneren Seite des Kanalunterteils (1) zwischen einer Seitenwand (2) und einem Deckelhalteprofil (4) geklemmt ist, **dadurch gekennzeichnet, dass** die Klemmfunktion einerseits durch in der Seitenwand (2) ausgeschnittene Federlaschen (8) und andererseits durch eine Kontaktfläche des Deckelhalteprofils (4) gewährleistet wird, und dass die Deckelhalteprofile (4) mit horizontalen Schrauben (16) von innen an die Seitenwände (2) geschraubt sind, wobei an dem Schaft (19) der Schraube (16) ein Quetschring (20) angebracht ist, dessen Breite in einem vorläufigen, unmontierten Zustand größer ist als die Dicke der zwischen den Deckelhalteprofilen (4) und den Seitenwänden (2) mittels in der Seitenwand (2) angebrachter Federlaschen (8) geklemmten Belagstoßkanten (6), so dass die Belagstoßkanten (6) entlang von Langlöchern (15), in denen die Quetschringe (20) aufgenommen sind, in dem vorläufigen, unmontierten Zustand gegen die Klemmung in der Höhe verstellbar sind.

2. Bodenkanalsystem nach Anspruch 1, **dadurch gekennzeichnet, dass** der Quetschring (20) aus einem Material besteht, insbesondere aus einem Kunststoff, der es ermöglicht, dass die Breite des Quetschrings (20) im endgültigen montierten Zustand der Breite der Belagstoßkante (6) entspricht.

3. Bodenkanalsystem nach einem der vorhergehenden Ansprüche, **dadurch gekennzeichnet, dass** das Deckelhalteprofil (4) aus Aluminium oder einer Aluminiumlegierung besteht.

4. Bodenkanalsystem nach einem der vorhergehenden Ansprüche, **dadurch gekennzeichnet, dass** der abnehmbare Deckel, der das Innere des Kanalunterteils (1) teilweise oder vollständig abdeckt, mittels Schrauben im Deckelhalteprofil (4) mit dem Kanalunterteil (1) verbunden wird.

5. Bodenkanalsystem nach einem der vorhergehenden Ansprüche, **dadurch gekennzeichnet, dass** am Boden (3) des Kanalunterteils (1) ferner ein oder mehrere, gegebenenfalls demontierbare, Stützrahmen (21) vorgesehenen sind, die den auf den Deckel ausgeübten Druck besser verteilen.

6. Bodenkanalsystem nach Anspruch 5, **dadurch gekennzeichnet, dass** der oder die Stützrahmen (21) ebenfalls Mittel aufweisen, die es ermöglichen, Elektrogeräte dort einzurasten, elektrische Kabel hindurchzuführen, zu befestigen und/oder durch das gesamte Kanalunterteil (1) hindurch zu führen.

## Claims

1. Floor duct system, with a U-shaped duct lower part (1) with side walls (2), a bottom (3) and lateral cover holding profiles (4) which are arranged in the interior of the duct lower part (1), a removable cover which covers the interior of the duct lower part (1) partially or completely and is supported and held at least by the cover holding profiles (4), at least one system carrier strip (5) which is fastened releasably to the bottom (3) of the duct lower part (1) and serves for fastening electric installation units and possibly as a reinforcing web or support, the floor duct system comprising, furthermore, a covering abutting edge (6) for a or each side wall (2), which covering abutting edge (6) is configured substantially as a strap-shaped, rigid strip (7) which can be pulled out upwards, in order that its projecting vertical height can be adjusted with respect to the cover and is constant along the entire strip (7), each covering abutting edge (6) being clamped on an inner side of the duct lower part (1) between a side wall (2) and a cover holding profile (4), **characterized in that** the clamping function is ensured firstly by way of spring clips (8) which are cut out in the side wall (2) and secondly by way of a contact face of the cover holding profile (4), and **in that** the cover holding profiles (4) are screwed from the inside on to the side walls (2) by way of horizontal screws (16), a crush ring (20) being attached to the shank (19) of the screw (16), the width of which crush ring (20) is greater in a preliminary, unmounted state than the thickness of the covering abutting edges (6) which are clamped between the cover holding profiles (4) and the side walls (2) by means of spring clips (8) which are attached in the side wall (2), with the result that the height of the covering abutting edges (6) can be adjusted counter to the clamping action in the preliminary, unmounted state along slots (15), in which the crush rings (20) are received.

2. Floor duct system according to Claim 1, **characterized in that** the crush ring (20) consists of a material, in particular of a plastic, which makes it possible that the width of the crush ring (20) in the final mounted state corresponds to the width of the covering abutting edge (6).

3. Floor duct system according to either of the preceding claims, **characterized in that** the cover holding profile (4) consists of aluminium or an aluminium alloy.

4. Floor duct system according to one of the preceding claims, **characterized in that** the removable cover, which covers the interior of the duct lower part (1) partially or completely, is connected to the duct lower part (1) by means of screws in the cover holding profile (4).

5. Floor duct system according to one of the preceding claims, **characterized in that**, furthermore, one or more supporting frames (21) which can possibly be dismantled and distribute the pressure exerted on the cover in an improved manner are provided on the bottom (3) of the duct lower part (1).

6. Floor duct system according to Claim 5, **characterized in that** the supporting frame or frames (21) likewise has/have means which make it possible for electric devices to be latched in there, for electric cables to be led through, fastened and/or guided through the entire duct lower part (1).

## Revendications

1. Système de canal de fond, comprenant une partie inférieure de canal en forme de U (1) munie de parois latérales (2), d'un fond (3) et de profilés de maintien de couvercle latéraux (4), agencés à l'intérieur de la partie inférieure de canal (1), un couvercle séparable, qui recouvre partiellement ou entièrement l'intérieur de la partie inférieure de canal (1) et est supporté et immobilisé au moins par les profilés de maintien de couvercle (4), au moins une barre porteuse de système (5) fixée de manière amovible sur le fond (3) de la partie inférieure de canal (1), qui sert à la fixation d'appareils d'installation électrique et éventuellement de traverses de renforcement ou de supports, le système de canal de fond comportant en outre pour une ou chaque paroi latérale (2) une arête de jonction formant revêtement (6), qui est configurée essentiellement sous la forme d'une barre rigide, en forme de bande (7), qui peut être extraite par le haut, dont la hauteur verticale dépassant est ainsi ajustable par rapport au couvercle et constante le long de la barre entière (7), chaque arête de jonction formant revêtement (6) étant serrée sur un côté intérieur de la partie inférieure de canal (1) entre une paroi latérale (2) et un profilé de maintien de couvercle (4), **caractérisé en ce que** la fonction de serrage est assurée, d'une part, par des languettes à ressort (8) découpées dans la paroi latérale (2) et, d'autre part, par une surface de contact du profilé de maintien de couvercle (4), et **en ce que** les profilés de maintien de couvercle (4) sont vissés de l'intérieur sur les parois latérales (2) avec des vis horizontales (16), une bague de compression (20) étant disposée sur la tige (19) de la vis (16), dont la largeur, dans un état préalable non monté, est supérieure à l'épaisseur des arêtes de jonction formant revêtement (6) serrées entre les profilés de maintien de couvercle (4) et les parois latérales (2) au moyen de languettes à ressort (8) disposées dans la paroi latérale (2), de telle sorte que les arêtes de jonction formant revêtement (6) sont ajustables en hauteur le long de trous allongés (15), dans lesquels sont logées les bagues de compression (20), dans l'état préalable non monté, contre le serrage.

2. Système de canal de fond selon la revendication 1, **caractérisé en ce que** la bague de compression (20) est constituée d'un matériau, notamment d'une matière plastique, qui permet à la largeur de la bague de compression (20) de correspondre, à l'état monté final, à la largeur de l'arête de jonction formant revêtement (6) .

3. Système de canal de fond selon l'une quelconque des revendications précédentes, **caractérisé en ce que** le profilé de maintien de couvercle (4) est constitué d'aluminium ou d'un alliage d'aluminium.

4. Système de canal de fond selon l'une quelconque des revendications précédentes, **caractérisé en ce que** le couvercle séparable, qui recouvre partiellement ou entièrement l'intérieur de la partie inférieure de canal (1), est relié à la partie inférieure de canal (1) au moyen de vis présentes dans le profilé de maintien de couvercle (4).

5. Système de canal de fond selon l'une quelconque des revendications précédentes, **caractérisé en ce qu'**un ou plusieurs cadres de support (21), éventuellement démontables, sont en outre prévus sur le fond (3) de la partie inférieure de canal (1), qui répartissent mieux la pression exercée sur le couvercle.

6. Système de canal de fond selon la revendication 5, **caractérisé en ce que** le ou les cadres de support (21) comprennent également des moyens qui permettent d'y encliqueter des appareils électriques, d'y passer des câbles électriques, de les fixer et/ou de les faire passer au travers de l'ensemble de la partie inférieure de canal (1).
